# EUROPEAN PATENT APPLICATION

(11) **EP 4 131 481 A1**
(43) Date of publication of application: **08.02.2023**
(21) Application number: 21779548.3
(22) Date of filing: 31.03.2021
(51) Int. Cl.: H01M 4/136, H01M 4/1397, H01M 4/36, H01M 4/38, H01M 4/62

(54) **POSITIVE ELECTRODE COMPOSITION FOR LITHIUM SULFUR BATTERIES, POSITIVE ELECTRODE FOR LITHIUM SULFUR BATTERIES, AND LITHIUM SULFUR BATTERY**

(30) Priority: 31.03.2020 JP 2020063851
(71) Applicant: Nichia Corporation, Anan-shi, Tokushima 774-8601 (JP)
(72) Inventor: SUGIMOTO, Takashi, Anan-shi, Tokushima 774-8601 (JP); YOSHIDA, Hideki, Anan-shi, Tokushima 774-8601 (JP); KOIZUKA, Toru, Anan-shi, Tokushima 774-8601 (JP); HATA, Shoma, Anan-shi, Tokushima 774-8601 (JP)
(74) Representative: Vossius & Partner Patentanwälte Rechtsanwälte mbB
(86) International application number: PCT/JP2021/013926
(87) International publication number: WO 2021/201127

(57) **Abstract**

Provided is a positive electrode composition with which a lithium sulfur battery may achieve a high cycle capacity retention. The positive electrode composition for lithium sulfur batteries includes a sulfur-carbon composite including a carbon material having void spaces and an elemental sulfur containing material disposed in the void spaces of the carbon material, and a lithium transition metal composite oxide.

## Description

### TECHNICAL FIELD

The present disclosure relates to a positive electrode composition for lithium sulfur batteries, a positive electrode for lithium sulfur batteries, and a lithium sulfur battery.

### BACKGROUND ART

A lithium sulfur battery is a secondary battery whose energy density per unit mass is high, and uses, for example, a mesoporous sulfur-carbon composite having sulfur disposed in mesopores thereof, as the material for the positive electrode thereof (see, e.g., Japanese Laid-Open Patent Publication No. 2010-095390). The lithium sulfur batteries are expected, for example, for use in large power devices in electric vehicles and the like, and for use to be mounted on aircrafts such as drones, as batteries each being lighter than a traditional lithium ion battery, and these uses require batteries each having a high cycle capacity retention.

### SUMMARY OF THE INVENTION

### PROBLEM TO BE SOLVED BY THE INVENTION

An object of one embodiment of the present disclosure is to provide a positive electrode composition with which a lithium sulfur battery may achieve a high cycle capacity retention.

### MEANS FOR SOLVING PROBLEM

A first embodiment is a positive electrode composition for lithium sulfur batteries, that includes a sulfur-carbon composite that includes a carbon material having void spaces and an elemental sulfur containing material disposed in the void spaces of the carbon material, and a lithium transition metal composite oxide.

A second embodiment is a positive electrode for lithium sulfur batteries, that includes a current collector and a positive electrode active material layer that is disposed on the current collector, and whose positive electrode active material layer includes the positive electrode composition for lithium sulfur batteries of the first embodiment.

A third embodiment is a lithium sulfur battery that includes the positive electrode for lithium sulfur batteries of the second embodiment, a negative electrode, and an electrolyte disposed between the positive electrode and the negative electrode.

### EFFECT OF THE INVENTION

According to one embodiment of the present disclosure, a positive electrode composition with which a lithium sulfur battery may achieve a high cycle capacity retention may be provided.

### BRIEF DESCRIPTION OF DRAWINGS

Fig. 1 is an exemplary schematic perspective diagram depicting a positive electrode according to this embodiment.
Fig. 2 is an exemplary schematic plan diagram depicting a lithium sulfur battery according to this embodiment.
Fig. 3 is an exemplary scanning electron microscope (SEM) image of a porous carbon material that is used in Example.
Fig. 4 is an exemplary fine pore distribution chart of the porous carbon material that is used in Example.
Fig. 5 is an exemplary SEM image of a positive electrode composition for lithium sulfur batteries according to Example 1.
Fig. 6 is an exemplary cross-sectional diagram of a positive electrode composition for sulfur batteries according to Example 1.

### MODES FOR CARRYING OUT THE INVENTION

The term "step" as used herein includes not only an independent step but also a step that achieves the initial purpose thereof even in the case where the step is not clearly distinguishable from other steps. In the case where plural materials corresponding to each component are present in a composition, unless otherwise specified, the content of each component of the composition means the total amount of the plural materials present in the composition. As to an upper limit and a lower limit of a numerical range described herein, the numerical values can optionally be selected to be combined with each other. An embodiment of the present invention will be described below in detail. The embodiment described below exemplifies a positive electrode active material for lithium sulfur batteries, a positive electrode composition for lithium sulfur batteries, a positive electrode for lithium sulfur batteries, a lithium sulfur battery, and the like to embody the technical idea of the present invention, and the present invention is not limited to the positive electrode active material for lithium sulfur batteries, the positive electrode composition for lithium sulfur batteries, the positive electrode for lithium sulfur batteries, the lithium sulfur battery, and the like to be described below. The members described in the claims are not limited to the members of the embodiment.

### Positive Electrode Composition for Lithium Sulfur Batteries

A positive electrode composition for lithium sulfur batteries (hereinafter, also referred to simply as "positive electrode composition") includes a carbon material having therein void spaces, a material that includes elemental sulfur to be disposed in the void spaces of the carbon material, and a lithium transition metal composite oxide.

The positive electrode composition for lithium sulfur batteries includes the carbon material having the elemental sulfur containing material that is disposed in its void spaces, and the lithium transition metal composite oxide, and the cycle capacity retention may be improved of the lithium sulfur battery acquired by using the above positive electrode composition for lithium sulfur batteries. It can be considered that the cycle capacity retention is improved by, for example, an interaction between the lithium transition metal composite oxide included in the positive electrode composition for lithium sulfur batteries, and a sulfur-including component, such as, for example, lithium sulfide, sulfur, or a metal sulfide, eluted from the carbon material having the elemental sulfur containing material that is disposed in its void spaces.

The carbon material constituting the positive electrode composition only has to be a carbon material that has void spaces on/in at least one of the surface thereof and the inside thereof. Examples of the carbon material include, for example, mesoporous carbon, Ketjen black, acetylene black, activated carbon, a carbon nanotube, multi-layer graphene, and graphite. Examples of the mesoporous carbon include, for example, Cnovel (a registered trademark, manufactured by TOYO TANSO JAPAN). Among these carbon materials, the carbon materials whose secondary particles each have void spaces in the inside thereof are preferable and examples of these include, for example, mesoporous carbon, Ketjen black, and acetylene black, and the positive electrode composition may include at least one selected from the group consisting of these. The carbon material may be one of these alone or may be a combination of two or more of these.

The specific surface area of the carbon material, as a BET value, may be 100 m²/g or larger and 2,000 m²/g or smaller, is preferably 200 m²/g or larger, and is more preferably 500 m²/g or larger. The BET value is measured by one-point method that uses a nitrogen gas based on the Brunauer, Emmett, Teller (BET) theory. The charged and discharged capacities of the sulfur-carbon composite generally become larger as the BET value becomes larger.

The carbon material may be secondary particles each formed by aggregated primary particles, or may be secondary particles each having connected pores each formed by the void spaces connected to each other inside thereof. The volume mean particle diameter of the secondary particles of the carbon material may be, for example, 0.5 µm or larger and 100 µm or smaller, is preferably 1 µm or larger, and is more preferably 2 µm or larger. The volume mean particle diameter of the carbon material is preferably 50 µm or smaller, and more preferably 30 µm or smaller. The volume mean particle diameter of the carbon material is measured as a particle diameter that corresponds to the cumulative 50% from the small diameter side in the particle size distribution on a volumetric basis. The particle size distribution on a volumetric basis is measured using, for example, a laser diffraction particle size distribution measuring apparatus.

The primary particles constituting the secondary particles of the carbon material may each be a hollow particle. The particle diameter of each of the primary particles constituting the secondary particles may be, for example, 1 nm or larger and 500 nm or smaller. The particle diameter of each of the primary particles is preferably 2 nm or larger and is more preferably 5 nm or larger. The particle diameter of each of the primary particles is preferably 300 nm or smaller and is more preferably 100 nm or smaller. As to the particle diameter of each of the primary particles, for each of 10 secondary particles selected in an image observed using, for example, a scanning electron microscope (SEM), a transmission electron microscope (TEM), or a scanning transmission electron microscope (STEM), the spherical equivalent diameter is calculated from the contour length of each of 20 primary particles and the particle diameter of the primary particle is calculated as the arithmetic average of the spherical equivalent diameters.

Examples of the elemental sulfur containing material that is disposed in the void spaces of the carbon material include, for example, a sulfur elemental substance, and polysulfide that is produced in the processes of charging and discharging of a lithium sulfur battery. Examples of the elemental sulfur containing material include, for example, S₈, Li₂S₈, Li₂S₆, Li₂S₄, and Li₂S₂, and the sulfur elemental substance is preferable from the viewpoint of the yield.

The content rate of the elemental sulfur containing material that is disposed in the void spaces of the carbon material of the sulfur-carbon composite may be, for example, 25% by mass or higher and 95% by mass or lower, is preferably 50% by mass or higher and 90% by mass or lower, and is more preferably 67% by mass or higher and 80% by mass or lower as the rate of the mass of the material that includes elemental sulfur to the total mass of the carbon material and the elemental sulfur containing material. "67% by mass" is the content rate acquired when the mixing ratio of the elemental sulfur containing material, and the carbon material is 2:1. When the content rate of the elemental sulfur containing material is in the above ranges, any reduction of the capacity as the sulfur-carbon composite is alleviated.

The transition metal element constituting the lithium transition metal composite oxide only has to be at least one selected from the transition metal elements each capable of forming a lithium transition metal composite oxide. Examples of the transition metal element included in the lithium transition metal composite oxide include, for example, at least one element selected from the group consisting of scandium (Sc), titanium (Ti), vanadium (V), chromium (Cr), manganese (Mn), iron (Fe), Cobalt (Co), nickel (Ni), copper (Cu), zinc (Zn), yttrium (Y), zirconium (Zr), niobium (Nb), molybdenum (Mo), lanthanum (La), technetium (Tc), ruthenium (Ru), rhodium (Rh), palladium (Pd), silver (Ag), cadmium (Cd), hafnium (Hf), tantalum (Ta), tungsten (W), rhenium (Re), osmium (Os), iridium (Ir), platinum (Pt), and gold (Au). The cycle capacity retention of the lithium sulfur battery may be improved because the lithium transition metal composite oxide is included in the positive electrode composition. The lithium transition metal composite oxide may improve the cycle capacity retention by including lithium. It is predicted that the lithium transition metal composite oxide more easily has an interaction with the eluted sulfur component than a transition metal composite oxide including no lithium.

From the viewpoint of improving the cycle capacity retention, the transition metal element included in the lithium transition metal composite oxide is preferably at least one element selected from the group consisting of Sc, Ti, V, Cr, Mn, Fe, Co, Ni, Cu, Zn, Y, Zr, Nb, Mo, La, Ta, and W.

From the viewpoint of improving at least one of the cycle capacity retention and the rate ratio, the transition metal element included in the lithium transition metal composite oxide is preferably at least one selected from the group consisting of Ti, Ni, Zr, Nb, W and Fe. At least one of the cycle capacity retention and the capacity rate ratio of the lithium sulfur battery tends to be further improved because the lithium transition metal composite oxide includes these specific transition metals. The "capacity rate (hereinafter, referred to simply as C rate or rate) ratio" as used herein refers to, for example, a ratio calculated by a 1 C discharged capacity/a 0.2 C discharged capacity×100 as a ratio (%) of a 1 C discharged capacity to a 0.2 C discharged capacity. The " 1 C" is an electric current value acquired by the theoretical capacity of sulfur of 1,672 (mAh/g) × the weight of sulfur in the positive electrode composition (g)/l (h), and means the magnitude of the electric current that causes the theoretical capacity of sulfur (1,672 mAh/g) to be fully charged (or discharged) in one hour. The "0.2 C" is the magnitude of an electric current that has a 0.2-fold magnitude of 1 C. The 1 C discharged capacity means a discharged capacity that is measured when an electric current value of 1 C is caused to flow. The 0.2 C discharged capacity means a discharged capacity that is measured when an electric current value of 0.2 C is caused to flow. The 1 C discharged capacity is generally low compared to the 0.2 C discharged capacity and, therefore, the fact that the 1 C discharged capacity/the 0.2 C discharged capacity is closer to 100% means that the electricity quantity usable when the discharging is executed using a large electric current is larger.

From the viewpoint of simultaneously establishing a satisfiable cycle capacity retention and a satisfiable rate ratio, the transition metal element included in the lithium transition metal composite oxide is preferably at least one selected from the group consisting of Ni, Zr, and W. The cycle capacity retention and the rate ratio may both be improved because the lithium transition metal composite oxide includes these specific transition metal elements.

The positive electrode composition includes the lithium transition metal composite oxide, and the sulfur and the lithium transition metal composite oxide thereby interact with each other. As a result, for example, any voltage drop may tend to be avoided until the end stage of the discharging.

Examples of the lithium transition metal composite oxide include, for example, lithium titanate (such as, for example, Li₂TiO₃), lithium nickelate (such as, for example, Li₂NiO₂), lithium zirconate (such as, for example, Li₂ZrO₃), lithium niobate (such as, for example, LiNbO₃), lithium tungstate (such as, for example, Li₆WO₆), and lithium ferrite (LiFeO₂). The recognition of the lithium transition metal composite oxide may be confirmed by the fact that a diffraction peak derived from the compound is observed when X-ray diffraction measurement is executed.

The particle diameter of the lithium transition metal composite oxide in the positive electrode composition for lithium sulfur batteries may be, for example, 1 nm or larger and 1 µm or smaller, may preferably be 2 nm or larger, or 5 nm or larger, and may preferably be 800 nm or smaller, or 500 nm or smaller. The ratio of the particle diameter of the lithium transition metal composite oxide to the volume mean particle diameter of the carbon material (lithium transition metal composite oxide/carbon material) may be, for example, 0.0002 or greater and 0.2 or smaller, is preferably 0.1 or smaller, and is more preferably 0.05 or smaller. The particle diameter of the lithium transition metal composite oxide may be calculated using an electron microscope (SEM, TEM, or STEM). For example, an energy dispersive X-ray analysis (EDX) is executed for areas that are observed in a range from 200 magnifications to 100,000 magnifications by a scanning electron microscope (SEM). The lithium transition metal composite oxide is identified taking into consideration the contrast of each of the images observed by the electron microscope and the presence of the transition metal element confirmed by EDX. 50 particles of the lithium transition metal composite oxide are optionally selected and the spherical equivalent diameter is calculated from the contour length of each of the primary particles. The particle diameter of the lithium transition metal composite oxide is calculated as the arithmetic average of these. In the above, the range of the enlarging magnifications used in the case where the SEM images are acquired has been described, and the particles unable to be observed with the range may be observed using a transmission electron microscope (TEM) or a scanning transmission electron microscope (STEM). The enlarging magnification used in this case is in a range, for example, from 100,000 magnifications to 15,000,000 magnifications.

The content rate of the lithium transition metal composite oxide in the positive electrode composition for lithium sulfur batteries, for example, may be 0.1% by mass or higher and 30% by mass or lower, may preferably be 0.1% by mass or higher and 20% by mass or lower, may more preferably be 1% by mass or higher and 20% by mass or lower, is further preferably 2% by mass or higher and 15% by mass or lower, and is yet further preferably 3% by mass or higher and 10% by mass or lower as the content rate of the lithium transition metal composite oxide to the sulfur-carbon composite. The content rate of the lithium transition metal composite oxide in the positive electrode composition for lithium sulfur batteries, for example, may be 1% by mass or higher and 30% by mass or lower, may preferably be 1% by mass or higher, may preferably be 1% by mass or higher, 2% by mass or higher, or 3% by mass or higher, and may preferably be 20% by mass or lower, 15% by mass or lower, or 10% by mass or lower as the content rate of the lithium transition metal composite oxide to the sulfur-carbon composite. The capacity retention of the lithium sulfur battery may further be improved only when the content rate of the lithium transition metal composite oxide is in the above ranges.

The lithium transition metal composite oxide having a desired composition may be acquired using a known method. For example, the lithium transition metal composite oxide may be manufactured using a manufacturing method that includes the steps of mixing an alkali metal compound, a transition metal oxide having a desired composition, and the like with each other to acquire a raw material mixture, and applying a thermal process to the acquired raw material mixture. To the thermally processed substance acquired after the thermal process, a shredding process may be applied or a process of removing unreacted substances, side products, and the like by water washing or the like may be applied. A dispersion process, a classification process, and the like may further be also applied thereto. Methods of acquiring the transition metal oxide having a desired composition include a method of mixing a raw material compound (such as a hydroxide or a carbonated compound) to match with the target composition and decomposing the mixture to acquire the transition metal oxide using a thermal process. Methods are further present including a coprecipitation method according to which a raw material compound soluble in a solvent is dissolved in the solvent, precipitation of a precursor is acquired matching with the target composition using a temperature adjustment, a pH adjustment, input of a complexing agent, and the like, and a thermal process is applied to the acquired precursor to acquire the transition metal oxide.

The lithium transition metal composite oxide may be disposed on the sulfur-carbon composite or may be disposed on a conductive additive described later.

The lithium transition metal composite oxide may be disposed more on the outer surface of the carbon material than in the inside thereof. The cycle capacity retention tends to thereby be further improved. The lithium transition metal composite oxide may be disposed only on the outer surface of the carbon material. The cycle capacity retention tends to thereby be further improved. The outer surface of the carbon material may be the surface region of each of the particles identified as the carbon material in observation using, for example, a scanning electron microscope.

The lithium transition metal composite oxide may be partially disposed on the outer surface of the carbon material. "The lithium transition metal composite oxide is partially disposed on the outer surface of the carbon material" refers to that the lithium transition metal composite oxide is discontinuously disposed on the outer surface of the carbon material. The lithium transition metal composite oxide may be dotted about on the outer surface of the carbon material.

Because the lithium transition metal composite oxide is an insulator, the electric conductivity may be improved by partially disposing the lithium transition metal composite oxide on the outer surface of the carbon material or by allowing the lithium transition metal composite oxide to be dotted about on the outer surface, compared to that of the case where the lithium transition metal composite oxide fully covers the outer surface of the carbon material. It can be considered that, for example, the rate ratio may thereby be improved.

The positive electrode composition may further include, as necessary, a liquid medium, a binder, a conductive additive, and the like in addition to the carbon material, sulfur, and the lithium transition metal composite oxide described above. The positive electrode composition may be applied to the formation of the positive electrode of a lithium sulfur battery, and a lithium sulfur battery capable of being excellent in at least the cycle capacity retention may thereby be constituted.

An organic solvent or water may be used accordingly the use as the liquid medium. Examples of the organic solvent include, for example, water, an amide-based solvent such as N-methyl-2-pyrolidon (NMP), a ketone-based solvent such as diisopropyl ketone, diisobutyl ketone, or methylethylketone, a hydrocarbon-based solvent such as heptane, an ether-based solvent such as tetrahydrofuran, dimethoxyethane, or dioxolane, an amine-based solvent such as diethylenetriamine, and an ester-based solvent. One of these organic solvents may be used alone, or two or more of these organic solvents may be used in combination. The content rate of the liquid medium may be, for example, 10% by mass or higher and 90% by mass or lower to the total mass of the positive electrode composition.

The binder is a material that assists, for example, adhesion of the positive electrode composition to the conductive additive and the like, and adhesion of the positive electrode composition to a current collector. Examples of the binder include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene rubber (EPDM), sulfonated EPDM, styrene-butylene rubber, fluorine-containing rubber, and various copolymers. The content rate of the binder may be, for example, 0.05% by mass or higher and 50% by mass or lower to the total mass of the positive electrode composition.

The conductive additive is a material that improves the electric conductivity of, for example, the positive electrode active material layer described later. Examples of the conductive additive include, for example, graphite such as modified graphene, natural graphite, or artificial graphite, carbon black such as acetylene black, Ketjen black, channel black, furnace black, lamp black, or thermal black, an electric conductive fiber such as carbon fiber or metal fiber, and a carbon material such as graphene or a carbon nanotube. The content rate of the conductive additive may be, for example, 0.5% by mass or higher and 30% by mass or lower to the total mass of the positive electrode composition.

The positive electrode composition for lithium sulfur batteries is acquired by mixing the sulfur-carbon composite and the lithium transition metal composite oxide described above with each other. The liquid medium, the binder, the conductive additive, and the like may further be mixed therein as necessary. After the sulfur-carbon composite, the liquid medium, the binder, the conductive additive, and the like are mixed with each other in advance, the lithium transition metal composite oxide may be mixed therein. After the lithium transition metal composite oxide, the liquid medium, the binder, the conductive additive, and the like are mixed with each other in advance, the sulfur-carbon composite may be mixed therein. Detailed description of each of the sulfur-carbon composite, the lithium transition metal composite oxide, the liquid medium, the binder, and the conductive additive is as above.

### Positive Electrode Active material for Lithium Sulfur Batteries

The positive electrode active material for lithium sulfur batteries includes the carbon material having therein void spaces, the elemental sulfur containing material that is disposed in the void spaces of the carbon material, and the lithium transition metal composite oxide to be disposed on the surface of the carbon material.

In the positive electrode active material for lithium sulfur batteries, the lithium transition metal composite oxide is disposed on the surface of the carbon material whose void spaces have the elemental sulfur containing material, disposed therein, and the cycle capacity retention may be improved in the lithium sulfur battery that is acquired using the positive electrode active material for lithium sulfur batteries. It can be considered that the cycle capacity retention is improved because, for example, the lithium transition metal composite oxide disposed on the surface of the positive electrode active material for lithium sulfur batteries and the sulfur-including component, such as, for example, lithium sulfide, sulfur, or metal sulfide, eluted from the carbon material having the elemental sulfur containing material, disposed in its void spaces interact with each other.

The positive electrode active material for lithium sulfur batteries may be acquired in the course of manufacturing the above composition for lithium sulfur batteries or may be acquired by mixing the sulfur-carbon composite and the lithium transition metal composite oxide with each other in advance. Detailed description of each of the sulfur-carbon composite and the lithium transition metal composite oxide is as above.

### Positive Electrode for Lithium Sulfur Batteries

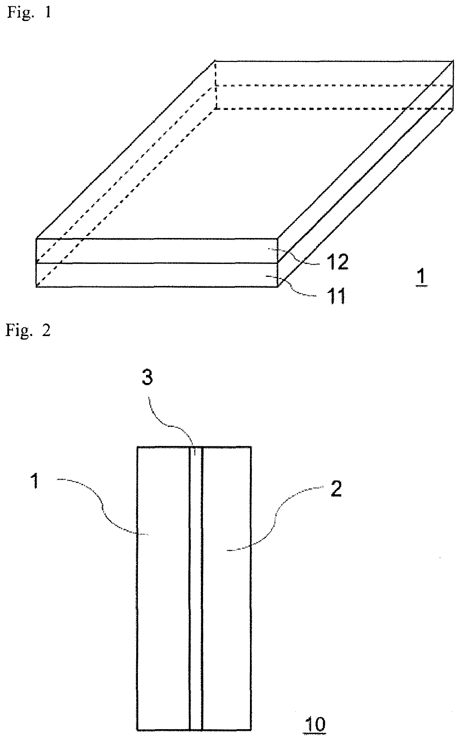

The positive electrode for lithium sulfur batteries (hereinafter, also referred to simply as "positive electrode") includes a current collector, and a positive electrode active material layer that is disposed the current collector and that includes the above positive electrode composition for lithium sulfur batteries. The positive electrode is manufactured by dispersing the above positive electrode composition in a solvent such as water or NMP to form slurry, thereafter applying the slurry on the current collector, and thereafter drying the slurry and pressure-forming the dried positive electrode composition and the current collector. Fig. 1 is a schematic perspective diagram depicting an example of the positive electrode according to this embodiment. A positive electrode 1 includes a current collector 11 and a positive electrode active material layer 12 disposed on the current collector 11.

Examples of the current collector include a metal such as copper, stainless steel, aluminum, nickel, or titanium, a composite material formed by surface-processing the surface of copper, stainless steel, or the like with carbon, nickel, titanium, copper, or the like, and a carbon foil. In the case where a lightweight lithium sulfur battery is manufactured, for example, aluminum and a carbon foil are preferable each as the current collector. As to the current collector, the bonding force of each of the positive electrode active material layer and the like may be enhanced by forming fine recesses and protrusions on the surface of the current collector. The current collector may take each of various forms such as a film, a sheet, a foil, a net, a porous body, a foamed body, and an unwoven cloth body. The thickness of the current collector may be, for example, 3 µm or larger and 500 µm or smaller.

### Negative Electrode

A known negative electrode only has to be used as the negative electrode constituting the lithium sulfur battery. A negative electrode material constituting the negative electrode may be, for example, an Li metal, an Li-Si alloy, an Li-Al alloy, an Li-In alloy, a lithium titanate (such as, for example, Li₄Ti₅O)₂ or LiTi₂O₄), a lithium-titanium composite oxide (such as, for example, Li₄Ti₅₋ₓMnₓO)₂: 0<x≤0.3), or LiₓC (x≤6). These negative electrode materials may each have a portion of lithium thereof substituted with another alkali metal. It is preferred that the negative electrode material be a Li metal, an Li-Si alloy, an Li-Al alloy, an Li-In alloy, LiₓC (x≤6), or the like. A high voltage lithium sulfur battery may be obtained by using any of these materials.

### Separator

A known material only has to be used for a separator, and examples of the material include, for example, porous polyethylene and porous polypropylene. A known separator that is coated may be used.

### Electrolyte

An electrolyte only has to include a lithium salt and the lithium salt only has to be selected as appropriate from the lithium salts that are each used in a traditional lithium ion battery. The lithium salt may include an anion having therein, for example, elemental fluorine. Specific examples of the lithium salt including the anion having therein elemental fluorine include LiPF₆, LiBF₄, LiSbF₆, LiAsF₆, LiSO₃CF₃, and LiN(SO₂CF₃)₂(LiTFSI). The electrolyte may include a lithium salt that does not include any elemental fluorine such as lithium nitrate or LiClO₄. Lithium nitrate may form a film that protects the negative electrode, and is therefore preferable. From these electrolytes, one alone, or two or more in combination may be used. The electrolyte may include an organic solvent. A carbonate-based solvent, an ether-based solvent, an ester-based solvent, an amide-based solvent, a nitryl-based solvent, or a sulfur-including solvent may be used as the organic solvent, or an organic solvent formed by substituting a part of the elements of any of the above organic solvents with fluorine may be used. Fluoroethylene carbonate formed by substituting a part of the elements of a carbonate-based solvent with fluorine is usable as the carbonate-based solvent. Fluoroethylene carbonate forms a protective film on the negative electrode and may therefore alleviate any reduction of the cycle capacity retention. Examples of the organic solvent include, for example, a carbonate-based solvent such as propione carbonate, ethylene carbonate, dimethyl carbonate, or ethyl methyl carbonate, an ether-based solvent such as 1,3-dioxolane, 1,2-dimethoxyethane, 1,3-dimethoxypropane, 2,2,3,3-tetrafluoropropyl difluoromethyl ether, or tetrahydrofuran, an ester-based solvent such as methyl formate, methyl acetate, or γ-butyllactone, an amide-based solvent such as N,N-dimethylacetamide, or N,N-dimethylformamide, and a sulfur-including solvent such as sulfolane, dimethyl sulfoxide, or 1,3-propanesultone. It is preferred that 1,3-dioxolane and 1,2-dimethoxyethane be each used as the organic solvent. These organic solvents tend to avoid any influence by the sulfur component eluted from the carbon material.

### Lithium Sulfur Battery

The lithium sulfur battery includes the above positive electrode for lithium sulfur batteries. The lithium sulfur battery includes the positive electrode for lithium sulfur batteries, the negative electrode, and the electrolyte disposed between the positive electrode and the negative electrode. The lithium sulfur battery may include the separator as necessary. Fig. 2 depicts an example of the lithium sulfur battery in this embodiment. A lithium sulfur battery 10 includes a positive electrode 1 for lithium sulfur batteries, a negative electrode 2, a separator 3 disposed between the positive electrode 1 for lithium sulfur battery and the negative electrode 2, and an electrolyte. The electrolyte is included in the positive electrode 1 for lithium sulfur batteries, the negative electrode 2, and the separator 3.

### [EXAMPLES]

The present invention will be described below in detail with reference to Examples and the present invention is however not limited by these Examples.

### (Example 1)

### <Preparation of Sulfur-carbon composite>

4.5 g of sulfur (98%; FUJIFILM Wako Pure Chemical Corporation) and 1.5 g of a porous carbon material (Cnovel (a registered trademark); manufactured by TOYO TANSO JAPAN) were mixed with each other to acquire a mixture. The acquired mixture was heated in a heat-resistant and pressure-resistant container at 170°C for 15 hours to acquire a sulfur-carbon composite that had sulfur embedded in the carbon material. The content rate of sulfur disposed in the void spaces of the carbon material in the sulfur-carbon composite was 75% by mass.

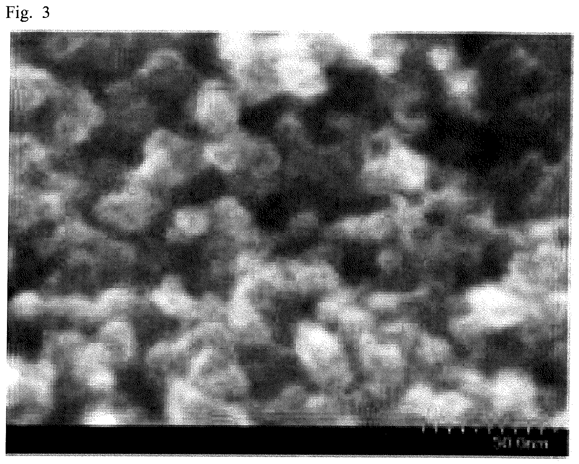

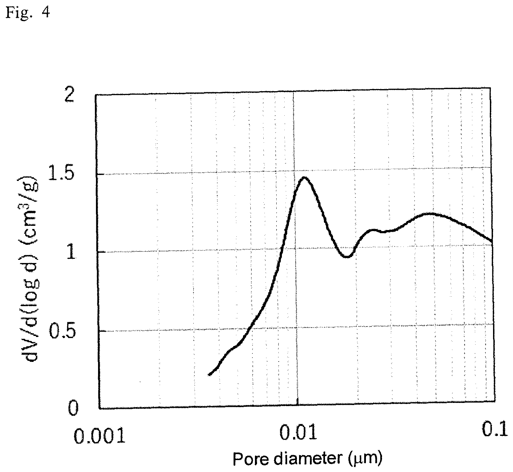

Fig. 3 depicts an SEM image of the used porous carbon material. Fig. 4 depicts a chart of the pore distribution measured using a mercury porosimeter. It can be seen from Fig. 3 that the porous carbon material is a carbon material having the primary particles thereof aggregated therein to form the secondary particles thereof. It can be seen from the micropore distribution in Fig. 4 that the carbon material is mesoporous carbon whose pore volume (<20 nm) is 0.63 cm³/g and whose pore peak diameter is 12 nm. The BET specific surface area of the used porous carbon material was 1,472 m2/g.

### <Preparation of Metal Oxide Slurry>

8.1 g of lithium carbonate and 8.5 g of tungsten oxide (WO₃) were mixed with each other, the acquired mixture was thermally processed at 900°C in an atmospheric air, and lithium tungstate (Li₆WO₆) was thereby acquired. The fact that the acquired thermally processed substance was lithium tungstate (Li₆WO₆) was confirmed by the fact that the diffraction peak derived from the compound was observed using an X-ray diffractometer (an X-ray diffractometer manufactured by Rigaku Corporation (model: MiniFlex), X-Ray Source: CuKα-ray, Tube Current: 15 mA, Tube Voltage: 40 kV). The acquired lithium tungstate was added to NMP to adjust the concentration thereof to be 5% by mass. A pulverizing process was applied to the acquired mixture in a bead mill using zirconia beads, and lithium tungstate slurry was thereby acquired.

### <Production of Positive Electrode Composition>

3.0 g of the sulfur-carbon composite (sulfur: 3.0 g×0.75=2.25 g), 0.15 g of carbon fiber by a gas phase method (VGCF^{(R)}-H), 3.0 g of lithium tungstate slurry whose concentration was 5% by mass as the metal oxide slurry, 12.0 g of an NMP solution including PVDF whose concentration was 5% by mass, and 2.0 g of NMP were mixed and kneaded with each other to acquire a positive electrode composition that included a lithium transition metal composite oxide of 5% by mass relative to the sulfur-carbon composite.

### (Example 2)

### <Preparation of Metal Oxide Slurry>

Lithium tungstate slurry whose concentration was 13% by mass was prepared in the same manner as that of Example 1.

### <Production of Positive Electrode Composition>

A positive electrode composition for Example 2 was acquired in the same manner as that of Example 1 except the fact that 3.0 g of the lithium tungstate slurry whose concentration was 13% by mass was used as the metal slurry.

### (Example 3)

### <Preparation of Metal Oxide Slurry>

4.8 g of lithium carbonate and 8.0 g of zirconium oxide (ZrO₂) were mixed with each other and the acquired mixture was thermally processed at 900°C in an atmospheric air, and lithium zirconate (Li₂ZrO₃) was thereby acquired. The fact that the acquired thermally processed substance was lithium zirconate (Li₂ZrO₃) was confirmed by the fact that X-ray diffraction measurement was performed under the same conditions as those of Example 1 and the diffraction peak derived from the compound was acquired. The acquired lithium zirconate was added to NMP to adjust the concentration thereof to be 5% by mass. A pulverizing process was applied to the acquired mixture in a bead mill using zirconia beads, and lithium zirconate slurry was thereby acquired.

### <Production of Positive Electrode Composition>

A positive electrode composition for Example 3 was acquired in the same manner as that of Example 1 except the fact that 3.0 g of the lithium zirconate slurry whose concentration was 5% by mass was used as the metal slurry.

### (Example 4)

### <Preparation of Metal Oxide Slurry>

2.5 g of lithium carbonate and 9.0 g of niobium oxide (Nb₂O₅) were mixed with each other and the acquired mixture was thermally processed at 900°C in an atmospheric air, and lithium niobate was thereby acquired. The fact that the acquired thermally processed substance was lithium niobate (LiNbOs) was confirmed by the fact that X-ray diffraction measurement was executed under the same conditions as those of Example 1 and the diffraction peak derived from the compound was acquired. The acquired lithium niobate was added to NMP to adjust the concentration thereof to be 5% by mass. A pulverizing process was applied to the acquired mixture in a bead mill using zirconia beads, and lithium niobate slurry was thereby acquired.

### <Production of Positive Electrode Composition>

A positive electrode composition for Example 4 was acquired in the same manner as that of Example 1 except the fact that 3.0 g of the lithium niobate slurry whose concentration was 5% by mass was used as the metal slurry.

### (Example 5)

### <Preparation of Metal Oxide Slurry>

2.9 g of lithium oxide and 7.1 g of nickel oxide (NiO) were mixed with each other and the acquired mixture was thermally processed at 600°C in a nitrogen atmosphere, and lithium nickelate was thereby acquired. The fact that the acquired thermally processed substance was lithium nickelate (Li₂NiO₂) was confirmed by the fact that the diffraction peak derived from the compound was observed by X-ray diffraction measurement (an X-ray diffractometer manufactured by Rigaku Corporation (smartLab), X-Ray Source: CuKα-ray, Tube Current: 200 mA, Tube Voltage: 45 kV). The acquired lithium nickelate was added to NMP to adjust the concentration thereof to be 5% by mass. A pulverizing process was applied to the acquired mixture in a bead mill using zirconia beads, and lithium nickelate slurry was thereby acquired.

### <Production of Positive Electrode Composition>

A positive electrode composition for Example 5 was acquired in the same manner as that of Example 1 except the fact that 3.0 g of the lithium nickelate slurry whose concentration was 5% by mass was used as the metal slurry.

### (Example 6)

### <Preparation of Oxide Slurry>

6.7 g of lithium carbonate and 7.3 g of titanium oxide (TiO₂) were mixed with each other and the acquired mixture was thermally processed at 900°C in an atmospheric air, and lithium titanate was thereby acquired. The fact that the acquired thermally processed substance was lithium titanate (Li₂TiO₃) was confirmed by the fact that X-ray diffraction measurement was executed under the same conditions as those of Example 1 and the diffraction peak derived from the compound was acquired. The acquired lithium titanate was added to NMP to adjust the concentration thereof to be 5% by mass. A pulverizing process was applied to the acquired mixture in a bead mill using zirconia beads, and lithium titanate slurry was thereby acquired.

### <Production of Positive Electrode Composition>

A positive electrode composition for Example 6 was acquired in the same manner as that of Example 1 except the fact that 3.0 g of the lithium titanate slurry whose concentration was 5% by mass was used as the metal slurry.

### (Example 7)

### <Preparation of Metal Oxide Slurry>

Lithium ferrite (LiFeOs, manufactured by Sigma-Aldrich Co. LLC) was first prepared. The lithium ferrite was added to NMP to adjust the concentration thereof to be 5% by mass. A pulverizing process was applied to the acquired mixture in a bead mill using zirconia beads, and lithium ferrite slurry was thereby acquired.

### <Production of Positive Electrode Composition>

A positive electrode composition for Example 7 was acquired in the same manner as that of Example 1 except the fact that 3.0 g of the lithium ferrite slurry whose concentration was 5% by mass was used as the metal slurry.

### (Comparative Example 1)

A positive electrode composition for Comparative Example 1 was acquired in the same manner as that of Example 1 except the fact that no metal oxide slurry was added.

### (Comparative Example 2)

A positive electrode composition for Comparative Example 2 was acquired in the same manner as that of Example 1 except the fact that 3.0 g of tungsten oxide slurry whose concentration was 5% by mass prepared using tungsten oxide (WO₃) was used instead of the lithium transition metal composite oxide, as the metal oxide slurry.

### <Production of Positive Electrode>

The positive electrode compositions acquired in Example 1 to Example 7, Comparative Example 1, and Comparative Example 2 were each applied onto a current collector using a doctor blade having a gap of 240 µm to be dried, and dried articles were thereby acquired. An aluminum foil coated with carbon was used as the current collector. The dried articles were each compression-molded using a roll press machine such that the density of the active material layer was 0.63 g/cm³, and were thereafter each cut into a predetermined size to thereby acquire a positive electrode.

### <Production of Non-Aqueous Electrolyte Solution>

Production of non-aqueous electrolyte was executed as follows. 1,3-dioxolane (DOL) and 1,2-dimethoxyethane (DME) were mixed with each other at the volume ratio of 5:5. Lithium-bis(trifluoromethanesulfonyl)imide (LiTFSI) was dissolved in the acquired mixed solution for the concentration thereof to be 1.0 mol/L. Lithium nitrate (LiNOs) was next dissolved therein for the concentration thereof to be 0.2 mol/L to produce the non-aqueous electrolyte solution.

### <Assembly of Non-Aqueous Electrolyte Secondary Battery>

Lead electrodes were attached to the positive electrode acquired as above and a separator consisting of porous polypropylene (Celgard 2400) was disposed, and these were accommodated in a bag-like laminate pack. After the accommodation, the laminate pack was vacuum-dried at 50°C to remove any moisture adsorbed to each of the members. After the vacuum-drying, lithium metal of the negative electrode disposed on a SUS foil was disposed in the laminate pack to face the positive electrode through the porous polypropylene. The non-aqueous electrolyte solution was injected into the laminate pack and the laminate pack was sealed to acquire a non-aqueous electrolyte secondary battery of a laminate type as a battery for evaluation. Evaluation of the following battery properties was executed using the acquired battery for evaluation.

### <Evaluation of Charging and Discharging Cycle Capacity Retention>

The battery for evaluation acquired as above was placed in a constant temperature chamber at 25°C and an evaluation test on the cycle capacity retention was executed. The evaluation test was executed for the charging and discharging voltage in the range from 1.8 V to 3.0 V. An electric current of a current value used when a capacity of 0.2 C is extracted was caused to flow as the discharging current. A discharged capacity Qcyc(1) at the first cycle immediately after the start of discharging was measured. Charging and discharging were thereafter repeated and a discharged capacity Qcyc(30) at the thirtieth cycle was measure. The capacity retention Pcyc (%) after 30 cycles was calculated by dividing Qcyc(30) by the acquired Qcyc(1) (=100×Qcyc(30)/Wcyc(1)).

### <Evaluation of Rate Ratio>

The battery for evaluation was placed in a constant temperature chamber at 25°C and an evaluation test of the rate ratio was executed. The evaluation test was executed for the charging and discharging voltage in the range from 1.8 V to 3.0 V. A 1 C discharged capacity was measured using an electric current value of 1 C. A 0.2 C discharged capacity was measured using an electric current value of 0.2 C. The rate ratio (the 1 C discharged capacity/the 0.2 C discharged capacity) was calculated using the 1 C discharged capacity and the 0.2 C discharged capacity. The result thereof is shown in Table 1. The addition rate in the table means the rate of the content of the transition metal oxide to the content of the sulfur-carbon composite.

**[Table 1]**

| | Metal oxide slurry | | Capacity retention (%) | Rate ratio (%) |
|---|---|---|---|---|
| | Type | Additive rate (mass%) | | |
| Example 1 | Lithium tungstate | 5 | 76 | 86 |
| Example 2 | Lithium tungstate | 13 | 78 | 82 |
| Example 3 | Lithium zirconate | 5 | 75 | 83 |
| Example 4 | Lithium niobate | 5 | 76 | 30 |
| Example 5 | Lithium nickelate | 5 | 74 | 76 |
| Example 6 | Lithium titanate | 5 | 75 | 32 |
| Example 7 | Lithium ferrite | 5 | 77 | 39 |
| Comparative Example 1 | - | - | 72 | 54 |
| Comparative Example 2 | Tungsten oxide | 5 | 70 | 38 |

From Table 1, it was able to confirm that the cycle capacity retention was improved of each of the batteries for evaluation including the positive electrodes produced using the positive electrode compositions for lithium sulfur batteries that included lithium transition metal composite oxides according to Example 1 to Example 7 compared to that of the battery for evaluation including the positive electrode produced using the positive electrode composition for lithium sulfur batteries that included no transition metal composite oxide. It was also able to confirm that the cycle capacity retention was improved of each of the batteries for evaluation including the positive electrodes produced using the positive electrode composition for lithium sulfur batteries that included lithium transition metal composite oxides according to Example 1 to Example 7 even compared to that of the battery for evaluation including the positive electrode produced using the positive electrode composition for lithium sulfur batteries that included tungsten oxide (WO₃). It was also able to confirm that the rate ratio was improved in the case where the positive electrode composition for lithium sulfur batteries including the lithium transition metal composite oxide that included W, Zr, or Ni according to each of Example 1 to Example 3 and Example 5 was used. As to the positive electrode compositions for lithium sulfur batteries including Lithium tungstate according to Example 1 and Example 2, the content rate of the lithium transition metal composite oxide to the total amount of the materials including the carbon material and elemental sulfur was 1% by mass or higher and 30% by mass or lower. In any of the above cases, the cycle capacity retention was improved compared to that of the case where the positive electrode composition for lithium sulfur batteries of each of Comparative Examples was used.

### (SEM Observation)

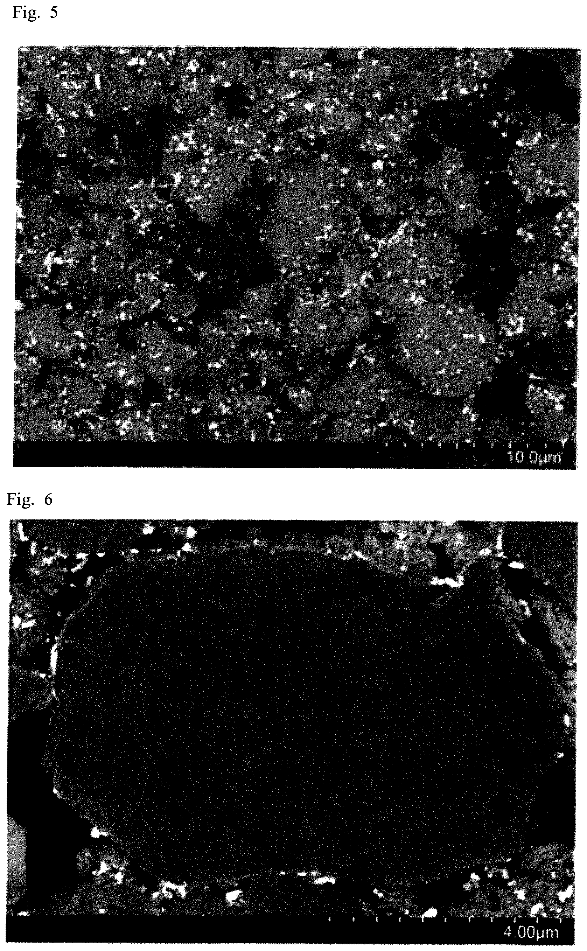

Observation was executed using a scanning electron microscope (SEM) for the positive electrode composition for lithium sulfur batteries of Example 1. The observation was executed using an SEM apparatus manufactured by Hitachi High-Tech Corporation (model: SU5000) and under the condition of the acceleration voltage of 3.0 kV. Fig. 5 is an SEM image by observation at a 4,000-times magnification. It is presumed from the contrast of the acquired SEM image that lithium tungstate was included in the white portions.

### (EDX Analysis)

An EDX analysis was executed for the positive electrode composition for lithium sulfur batteries produced in Example 1. Charging and discharging were executed for 30 times under the same conditions as those for the above cycle capacity retention for the battery for evaluation including the positive electrode composition for lithium sulfur batteries produced in Example 1, the positive electrode composition for lithium sulfur batteries was taken out from the lithium sulfur battery, and an EDX analysis was executed. The EDX analysis was executed using an EDX apparatus manufactured by Bruker (XFlash (a registered trademark) FlatQUAD 5060F) and under the condition of an acceleration voltage of 5 kV. As the result of the EDX analysis, in any of the above cases, presence of each of tungsten and oxygen was recognized in the positive electrode composition. It can therefore be stated based on the SEM observation and the EDX analysis that the lithium transition metal composite oxide was included in the positive electrode composition.

Fig. 6 is a cross-sectional SEM image of the positive electrode composition for lithium sulfur batteries produced in Example 1. It was confirmed from the acquired SEM image that lithium tungstate was disposed on the surface of the carbon material. It was also confirmed that lithium tungstate was dotted about on the outer surface of the carbon material.

The disclosure of Japanese Laid-Open Patent Publication No. 2020-063851 (Filling Date: March 31st, 2020) is incorporated herein in its entirety by reference. All the literatures, the patent applications, and the technical standards described herein are incorporated herein by reference to the extent equal to that of the case where it is specifically and individually described that each of the literatures, the patent applications, and the technical standards is incorporated herein by reference.

### EXPLANATIONS OF LETTERS OR NUMBERS

- 1: positive electrode
- 2: negative electrode
- 3: separator
- 10: lithium sulfur battery
- 11: current collector
- 12: positive electrode active material layer

## Claims

1. A positive electrode composition for lithium sulfur batteries, the positive electrode composition comprising:
a sulfur-carbon composite that comprises a carbon material having void spaces and an elemental sulfur containing material disposed in the void spaces of the carbon material; and
a lithium transition metal composite oxide.

2. The positive electrode composition for lithium sulfur batteries according to claim 1, wherein
the lithium transition metal composite oxide comprises at least one selected from the group consisting of Sc, Ti, V, Cr, Mn, Fe, Co, Ni, Cu, Zn, Y, Zr, Nb, Mo, La, Tc, Ru, Rh, Pd, Ag, Cd, Hf, Ta, W, Re, Os, Ir, Pt, and Au as a transition metal.

3. The positive electrode composition for lithium sulfur batteries according to claim 1 or 2, wherein
a content rate of the lithium transition metal composite oxide to the sulfur-carbon composite is 0.1% by mass or higher and 30% by mass or lower.

4. The positive electrode composition for lithium sulfur batteries according to any one of claims 1 to 3, wherein
a ratio of a particle diameter of the lithium transition metal composite oxide to a volume mean particle diameter of the carbon material is 0.0002 or greater and 0.2 or smaller.

5. The positive electrode composition for lithium sulfur batteries according to any one of claims 1 to 4, wherein
the lithium transition metal composite oxide is disposed more on an outer surface of the carbon material than in an inside thereof.

6. The positive electrode composition for lithium sulfur batteries according to any one of claims 1 to 5, wherein
the lithium transition metal composite oxide is disposed partially on the outer surface of the carbon material.

7. The positive electrode composition for lithium sulfur batteries according to any one of claims 1 to 6, further comprising
a conductive additive.

8. The positive electrode composition for lithium sulfur batteries according to any one of claims 1 to 7, further comprising
a liquid medium.

9. A positive electrode for lithium sulfur batteries, the positive electrode comprising:
a current collector; and
a positive electrode active material layer that is disposed on the current collector, wherein
the positive electrode active material layer comprises the positive electrode composition for lithium sulfur batteries according to any one of claims 1 to 7.

10. A lithium sulfur battery comprising:
the positive electrode for lithium sulfur batteries according to claim 9;
a negative electrode; and
an electrolyte disposed between the positive electrode and the negative electrode.
